# FASCICULE DE BREVET EUROPEEN

(11) **EP 0 487 377 B1**
(45) Date de publication et mention de la délivrance du brevet: **01.03.1995**
(21) Numéro de dépôt: 91403004.4
(22) Date de dépôt: 08.11.1991
(51) Int. Cl.: C03C 27/04, C08J 5/12

(54) **Vitrage encapsulé prêt à être monté et procédé de fabrication**
Eingekapselte Verglasung zur Montage und Verfahren zur Herstellung
Encapsulated glazing ready for mounting and process for its production

(30) Priorité: 16.11.1990 FR 9014259
(43) Date de publication de la demande: 27.05.1992
(73) Titulaire: SAINT-GOBAIN VITRAGE INTERNATIONAL, 92400 Courbevoie (FR)
(72) Inventeur: Daude, Gérard, F-33140 Villenave d'Ornon (FR); Bravet, Jean-Louis, F-60150 Thourotte (FR); Dimier, Gérard, F-33400 Talence (FR)
(74) Mandataire: Muller, René

(56) Documents cités:
- EP-A- 0 378 462
- DE-C- 883 183
- FR-A- 2 160 658
- FR-A- 2 209 811
- FR-A- 2 215 454
- GB-A- 2 051 846
- GB-A- 2 138 016

## Description

L'invention concerne un vitrage encapsulé prêt à être monté par collage dans une baie de carrosserie.

Le montage des vitrages pour véhicules à moteur par collage dans la baie de carrosserie présente plusieurs avantages, notamment : il permet le maintien du vitrage dans la baie de carrosserie en cas de choc violent, il peut être automatisé, il autorise un montage affleurant du vitrage à la carrosserie ce qui réduit le coefficient de pénétration du véhicule dans l'air.

Dans le cas du montage d'un vitrage monolithique ou feuilleté non muni d'un profil de surmoulage, le collage du vitrage dans la baie de carrosserie est réalisé par dépôt d'un cordon adhésif convenable sur une bordure émaillée prévue sur la périphérie de la face du vitrage orientée vers l'habitacle. Cette bordure émaillée est destinée notamment à protéger l'adhésif des rayonnements UV qui risquent d'en altérer les propriétés et elle a aussi un rôle esthétique en cachant à la vue un joint de colle inesthétique.

Dans le cas d'un vitrage encapsulé, c'est-à-dire d'un vitrage muni d'un profil périphérique surmoulé (ou joint d'encapsulation) destiné notamment à remplacer le joint de finition, le montage du vitrage par collage peut être réalisé comme pour les vitrages précédents, par collage sur le verre ou une bordure émaillée en limite du profil surmoulé. Dans une variante, le collage peut se faire directement sur le profil surmoulé. Mais dans cette variante, le collage obtenu avec les joints de colle connus n'est pas satisfaisant, les forces d'adhésion étant généralement insuffisantes ou ne se conservant pas dans le temps.

Cette mauvaise adhésion peut être due à la présence sur le profil surmoulé d'un reste du produit démoulant que l'on peut utiliser lors de la fabrication d'un joint d'encapsulation, notamment en polyuréthane, dans le but d'éviter le collage du profil surmoulé avec le moule au cours de sa fabrication. Lorsque le vitrage encapsulé est retiré du moule, il reste du produit démoulant sur le profil et même un nettoyage avec différents types de solvants ne permet pas d'obtenir des caractéristiques de collage suffisantes. La mauvaise adhésion peut aussi être due notamment dans le cas d'un profil surmoulé au chlorure de polyvinyle (PVC) aux agents de stabilisation contre l'action de la lumière, ou aux plastifiants qu'on incorpore le cas échéant au matériau destiné à former le profil.

Dans la publication de brevet européen EP 0 378 462, on a déjà proposé un vitrage encapsulé prêt à la pose qui présente une aptitude au collage répondant aux normes de sécurité des vitrages.

Le vitrage encapsulé décrit dans ce document est un vitrage monolithique ou feuilleté comportant sur sa périphérie un profil surmoulé (ou joint d'encapsulation) dont une face est destinée à être collée dans une baie de carrosserie, telle une baie de carrosserie de véhicule à moteur par exemple, par l'intermédiaire d'un cordon adhésif, ladite face étant réactive en présentant des groupes OH libres, susceptibles de réagir ultérieurement avec le cordon adhésif utilisé pour le montage du vitrage dans la baie.

La solution proposée dans ce document donne entière satisfaction en particulier pour un vitrage muni d'un profil surmoulé à base d'un polyuréthane, ce profil surmoulé pouvant être obtenu par RIM (moulage par injection réactive) ou par injection thermoplastique.

Néanmoins lorsqu'il s'agit d'un profil surmoulé en chlorure de polyvinyle (PVC) la solution préconisée n'est pas entièrement satisfaisante, et en particulier le collage entre ce profil surmoulé avec les mastics polyuréthanes couramment utilisés pour le collage des vitrages dans une baie de carosserie peut s'avérer insuffisant dès les premiers temps ou encore, ce collage peut ne pas se conserver suffisamment dans le temps.

L'invention propose un nouveau vitrage monolithique ou feuilleté comportant sur sa périphérie un profil surmoulé dont la face destinée à être collée dans une baie de carosserie est revêtue d'une couche polymérisée obtenue à partir d'une composition comprenant des composants de base pour former après polymérisation un polyuréthane à groupe OH libres, le composant polyol étant pris en excès en terme d'équivalents par rapport au composant isocyanate, le rapport des groupes NCO aux groupes OH étant compris entre 0,30 et 0,99, le composant polyol comprenant au moins un copolymère de chlorure de polyvinyle (PVC) à groupements hydroxyles libres.

En tant que copolymère PVC à groupements hydroxyles, on peut utiliser des résines vinyliques présentant la structure générale suivante : 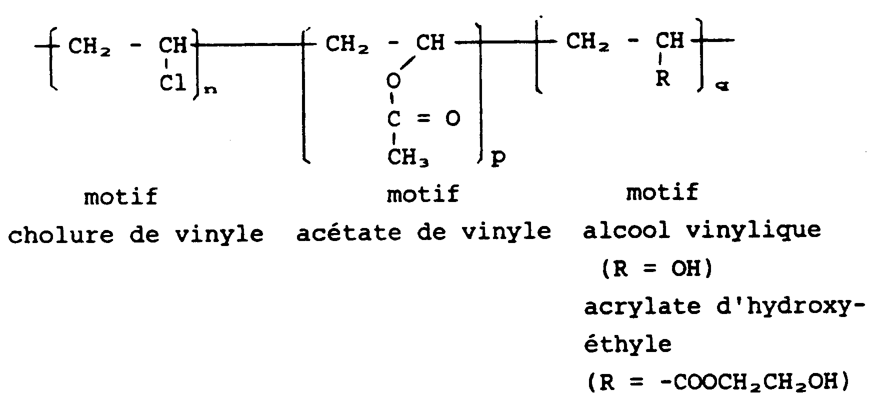
et des masses moléculaires comprises entre 2 000 et 100 000 environ et de préférence entre 5 000 et 50 000 environ, le motif chlorure de vinyle correspondant à environ 50 à 95 % en poids, le motif acétate de vinyle correspondant à environ 2 à 40 % en poids et le motif alcool vinylique ou acrylate d'hydroxyéthyle correspondant à environ 2 à 40 % en poids.

Selon une caractéristique de l'invention, la composition réactive utilisée peut comprendre en tant que composant polyol, outre le copolymère du type PVC à groupements hydroxyles, au moins un autre polyol qui de préférence est un diol de masse moléculaire inférieure à 400, choisi parmi ceux utilisés généralement en tant qu'allongeur de chaîne dans la préparation des polyuréthanes : on peut citer par exemple les :
éthylèneglycol, propanediol-1,2, propanediol-1,3, butanediol- 1,2,-1,3,-1,4, diméthyl-2,2 propanediol-1,3 (néopentylglycol), pentanediol-1,5, hexanediol-1,6, octanediol-1,8, décanediol- 1,10, dodécanediol-1,12, cyclohexanediméthanol, bisphénol A, méthyl-2- pentanediol- 2,4, méthyl-3 pentanediol-2,4, éthyl-2- hexanediol-1,3, triméthyl- 2,2,4-pentanediol-1,3, diéthylèneglycol, triéthylèneglycol, tétraéthylèneglycol, butyne- 2- diol-1,4, butènediol -1,4 et décynediol substitués et(ou éthérifiés, hydroquinone - bis-hydroxyéthyléther, bisphénol A éthérifiés par deux ou quatre groupes d'oxyde de propylène, acide diméthylolpropionique.

Le composant polyol de la composition utilisée peut aussi comprendre un polyol de fonctionnalité supérieure à deux, tels des triols aliphatiques monomères comme le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Le composant polyol peut aussi comprendre au moins un polyol long de masse moléculaire comprise entre 400 et 4000, choisi parmi les polyétherdiols, polyesterdiols, polycaprolactonediols.

Le PVC à groupements hydroxyles représente de 0,1 équivalent OH à 1 équivalent OH pour 1 équivalent au total du composant polyol.

La proportion entre le nombre d'équivalents OH apportés par le PVC à groupements OH (PVC-OH) et le nombre d'équivalents OH apportés par le ou les autres polyols dépend généralement de la masse moléculaire du PVC-OH utilisé.

Ainsi le nombre d'équivalents OH apportés par le PVC-OH sera généralement d'autant plus faible que sa masse moléculaire sera élevée ceci pour un pourcentage en poids de motif alcool vinylique ou acrylate d'hydroxyéthyle donné. On peut comprendre que plus le nombre de groupes OH libres dans un PVC-OH donné est important, et plus le produit sera réactif.

Une des caractéristiques essentielles de l'invention est la présence de groupes OH à la surface du profil surmoulé traité. Ces groupes OH en excès doivent être stables, c'est-à-dire qu'ils doivent demeurer réactifs pendant un stockage, même prolongé, pour pouvoir réagir ultérieurement avec des groupes NCO libres du joint adhésif, généralement un joint en polyuréthane qui au moment de la pose n'est pas entièrement polymérisé.

Le composant isocyanate peut être choisi parmi les isocyanates difonctionnels aliphatiques ou aromatiques tels que l'hexaméthylènediisocyanate, le 2,2,4- triméthyl -1,6- hexaméthylènediisocyanate, le bis (4- isocyanatocyclo hexyl)méthane, l'isocyanato- 1, 3- isocyanatométhyl-3,5,5-triméthylcyclohexane (IPDI), le toluylène diisocyanate (TDI), les isocyanates de fonctionnalité supérieure à 2, tels les biurets d'isocyanate, les isocyanurates, le diisocyanatodiphényl-méthane partiellement polymérisé et de fonctionnalité comprise entre 2 et 3, etc...

L'invention concerne également un procédé de fabrication d'un vitrage surmoulé présentant une aptitude au collage améliorée et qui se conserve dans le temps, pour un montage dudit vitrage surmoulé dans une baie de carrosserie.

Le procédé selon l'invention consiste donc à former une couche superficielle sur au moins la face du joint de surmoulage destinée à recevoir le cordon décollage à l'aide d'une composition d'un mélange réactif apte à former une couche de polyuréthane avec des groupes OH libres, le composant polyol comprenant au moins un PVC à groupements OH, et à polymériser au moins partiellement la couche déposée.

La composition peut être appliquée sous la forme d'une solution dans un solvant afin notamment de faciliter son application sur le profil à traiter.

La polymérisation de la couche de revêtement obtenue à partir de la composition de traitement peut être réalisée par voie thermique à température élevée et de courte durée, par exemple à une température d'environ 80 à 120°C pendant une durée de l'ordre de une à quelques minutes. Elle peut aussi être réalisée à la température dite ambiante, c'est-à-dire d'environ 20 à 25°C pendant une durée beaucoup plus longue, par exemple 24 heures. Entre ces deux types de polymérisations, on peut également envisager tout autre cycle de polymérisation thermique. L'avantage d'une polymérisation rapide réside essentiellement dans une plus grande facilité de manipulation du vitrage traité. On peut aussi utiliser le cas échéant d'autres types de polymérisations, par exemple par micro-ondes, par catalyse en phase vapeur, par rayonnement, etc...

Dans une forme préférée de l'invention, avant de revêtir la face à traiter du profil surmoulé, on procède à un prétraitement de cette face à traiter du profil surmoulé.

Ce prétraitement peut consister en un nettoyage à l'aide d'un solvant et il peut s'effectuer en une ou plusieurs fois. Il a pour but notamment d'éliminer, au moins partiellement de ladite face, le produit démoulant lorsqu'on utilise un tel produit au cours du procédé de moulage du joint et/ou le cas échéant le stabilisant ou les autres agents ayant une influence négative sur l'ahdésion. Le solvant utilisé pour le prétraitement peut être choisi notamment parmi les solvants chlorés, l'essence de térébenthine, le white-spirit, le pentane, le tétrahydrofurane (THF), etc..., seul ou en mélange. De préférence, on utilise de l'acétone, de l'heptane ou de l'isododécane.

Comme indiqué précédemment, l'invention est avantageusement appliquée à un vitrage pourvu d'un profil d'encapsulation en PVC. Elle peut ainsi s'appliquer à un profil en PVC obtenu par injection thermoplastique ou par injection sous pression réduite d'un mélange ayant la viscosité adéquate d'un PVC avec un catalyseur, par exemple des produits connus sous l'appellation plastisol. Elle peut aussi s'appliquer à un profil en polyuréthane obtenu par injection thermoplastique ou par injection réactive (RIM), ou encore à un profil obtenu par injection thermoplastique d'autres matières thermoplastiques, telles des élastomères thermoplastiques, en particulier des élastomères oléfiniques ou styréniques.

Pour faciliter le dépôt et la formation de la couche de revêtement selon l'invention, on prépare généralement une solution de la composition réactionnelle destinée à former un polyuréthane à groupes OH libres. A cette fin, on ajoute un solvant, par exemple de la méthyléthylcétone ou de la méthylisobutylcétone. La concentration de la solution du mélange réactionnel dépend de l'épaisseur désirée pour la couche de revêtement. Cette concentration est généralement comprise entre 10 et 50 % en poids.

Le dépôt de la solution sur le profil surmoulé peut s'effectuer par exemple à l'aide d'un feutre.

L'épaisseur de la couche de revêtement selon l'invention est comprise généralement entre 10 et 50 »m.

D'autres caractéristiques et avantages de l'invention apparaîtront dans la description suivante d'exemples de vitrages et de traitements conformes à l'invention.

### EXEMPLE 1

On fabrique un vitrage encapsulé pour véhicule automobile, par exemple un vitrage de custode, par le procédé de moulage par injection thermoplastique.

Le produit injecté, utilisé, est un chlorure de polyvinyle sans groupements nitriles choisis parmi ceux bien connus pour cette application. A cette fin, le vitrage en verre est placé dans un moule. Après fabrication du profil surmoulé sur le vitrage, le vitrage encapsulé est démoulé et on traite la surface du joint surmoulé, au moins la face destinée a être collée ultérieurement par l'intermédiaire d'un cordon de colle dans la baie de carrosserie, à l'aide d'acétone.

Après un séchage de quelques minutes à la température ambiante, on applique à l'aide d'un feutre sur la face nettoyée et séchée, une composition formée d'un mélange d'un composant isocyanate : le méthylène diphényldiisocyanate partiellement polymérisé et présentant une fonctionnalité comprise entre 2 et 3, et d'un composant polyol formé essentiellement d'un PVC à terminaisons hydroxyles, de masse moléculaire 5 500 environ et de formule générale : 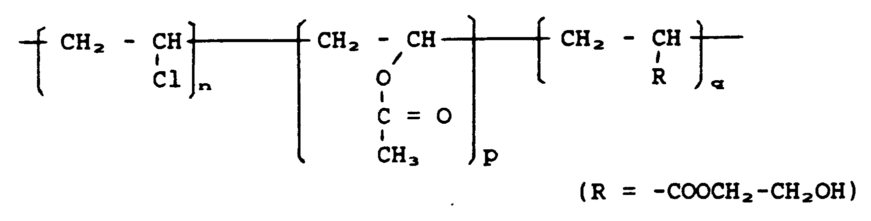
dans laquelle le motif chlorure de vinyle représente 67 % en poids environ, le motif acétate de vinyle représente 11 % en poids environ et le motif acrylate représente 22 % en poids environ.

Les composants sont pris en quantités telles qu'à 0,8 équivalent d'isocyanate correspond 1 équivalent OH.

La composition contient égalaient du dilaurate de dibutylétain en tant que catalyseur du polyuréthane, à raison de 0,03 % du poids des composants du polyuréthane.

La compositon appliquée est de préférence sous forme d'une solution du mélange décrit ci-dessus, dans de la méthyléthylcétone, la concentration du mélange réactionnel étant d'environ 25 % en poids.

L'étalement de la composition réactive, sur le joint surmoulé, s'effectue à l'aide d'un feutre. Après étalement, on polymérise par un chauffage dans une enceinte à 120°C qui procure une température de peau d'environ 85°C durant 5 minutes environ. L'épaisseur après séchage de la couche déposée est d'environ 15 à 25 »m.

Le vitrage encapsulé finalement obtenu est apte à la pose par collage dans une baie de carrosserie. Cette aptitude au collage se conserve même après un long stockage du vitrage. Le cordon adhésif utilisé pour le collage peut être tout cordon adhésif utilisé pour le collage direct du verre ou d'une bordure émaillée à la baie de carrosserie. On peut citer par exemple un cordon ou mastic en polyuréthane à deux composants ou un cordon ou mastic en polyuréthane à un composant durcissable à l'humidité.

L'adhésion obtenue entre le profil surmoulé du vitrage et le cordon adhésif est solide et durable.

Cette adhésion peut être évaluée à l'aide d'un test de pelage sur une éprouvette constituée d'une languette du matériau formant le profil d'encapsulation, de 2 cm de large, sur laquelle on a déposé et fait durcir par polymérisation le cordon adhésif de même largeur utilisé pour le montage par collage des vitrages dans la baie de carrosserie. Le cordon adhésif utilisé est un joint commercialisé sous l'appellation BETASEAL HV3. Le cordon adhésif est déposé sur le profil surmoulé traité selon l'invention suivant deux protocoles : dans l'un le cordon est déposé juste après le traitement et dans l'autre le cordon est déposé sur le profil 7 jours après le traitement.

Les mesures d'adhésion par pelage à 180° des éprouvettes sont pratiquées juste après le durcissement dans les conditions normales du mastic de collage, qui est ici de 12 jours. L'adhésion mesurée est Ho. On mesure aussi l'adhésion H₇ après 7 jours supplémentaires dans des conditions de cataplasme humide, conditions connues selon la méthode d'essai RENAULT 1165 H7.

On recherche généralement une rupture cohésive du cordon adhésif, et avec des valeurs au moins égales à 60 N/cm pour Hₒ et au moins égales à 40 N/cm pour H₇.

Les valeurs ainsi mesurées pour l'exemple 1 sont :
- Hₒ = 70 N/cm en moyenne
- H₇ = 50 N/cm en moyenne avec une rupture cohésive du cordon de collage.

### Exemples comparatifs

On fabrique un vitrage surmoulé comme dans l'exemple 1. Mais après le démoulage du vitrage encapsulé, on ne procède qu'au prétraitement de la face du profil à coller, avec un ou plusieurs solvants comme décrits ci-après, c'est-à-dire sans traitement de la face à l'aide d'une composition réactive.

### Exemple comparatif 1

On nettoie plusieurs fois la face avec de l'acétone. Les valeurs obtenues mesurées dans les conditions décrites précédemment sont Hₒ = 20 N/cm avec une rupture adhésive. Il est superflu de mesurer H₇.

### Exemple comparatif 2

On nettoie la face avec de l'heptane. La valeur Hₒ obtenue est de 20 N/cm avec une rupture adhésive.

### Exemple comparatif 3

On opère comme dans l'exemple 1, sauf qu'après séchage, on applique une composition réactive différente en ce qu'elle ne contient pas de PVC à groupements OH en tant que composant polyol mais un mélange d'un polypropylèneglycol à raison de 0,3 équivalent et de butanediol-1,4, à raison de 0,7 équivalent OH pour 0,8 équivalent NCO. La composition adhésive est une solution à 20 % dans la méthyléthylcétone.

Les valeurs mesurées pour cet exemple comparatif sont:
- Hₒ =: 30 N/cm en moyenne
- H₇ =: 15 N/cm en moyenne
ce qui n'est pas satisfaisant, la rupture étant cohésive ou adhésive selon les échantillons.

### EXEMPLE 2

On opère comme dans l'exemple 1, sauf qu'on remplace le PVC à groupements hydroxyles de cet exemple par un autre PVC à groupements hydroxyles qui présente une masse moléculaire de 27 000 environ et dans lequel le motif chlorure de vinyle représente 90 % en poids environ, le motif acétate de vinyle représente 4 % en poids environ et le motif alcool vinylique 6 % en poids environ.

La composition réactive est mise en solution à 13 % dans la méthyléthylcétone.

Les autres conditions sont identiques à celles de l'exemple 1. On obtient finalement les valeurs de pelage suivantes :
- Hₒ =: 65 N/cm
- H₇ =: 45 N/cm.

La rupture est cohésive.

### EXEMPLE 3

On opère comme dans l'exemple 1, en utilisant cette fois un PVC à groupements hydroxyles de masse moléculaire 15 000 environ et dans lequel le motif chlorure de vinyle représente 81 % en poids, le motif acétate de vinyle 4 % en poids, et le motif acrylate d'hydroxyéthyle représente 15 % en poids. La composition réactive est mise en solution à 15 % dans la méthyléthylcétone.

On obtient finalement les valeurs de pelage suivantes:
- Hₒ =: 70 N/cm
- H₇ =: 65 N/cm.

La rupture est cohésive.

### EXEMPLE 4

On opère comme dans l'exemple 1 sauf qu'on modifie le rapport des composants en prenant 0,6 équivalent NCO pour 1 équivalent OH.

Les autres conditions sont inchangées.

On obtient les valeurs de pelage suivantes :
- Hₒ =: 68 N/cm
- H₇ =: 52 N/cm.

La rupture est cohésive.

### Exemple comparatif 4

On opère comme dans l'exemple 1 sauf qu'on modifie le rapport des composants en prenant 1 équivalent NCO pour 1 équivalent OH.

On obtient les valeurs de pelage suivantes :
- Hₒ =: 70 N/cm
- H₇ =: 15 N/cm, ce qui est insuffisant.

La rupture est cohésive ou adhésive selon les échantillons. L'utilisation d'une composition réactive ne présentant pas un excès de groupes OH fournit une adhésion qui ne se conserve pas suffisamment dans le temps.

### EXEMPLE 5

On opère comme dans l'exemple 1, sauf qu'on utilise en tant que composant polyol, un mélange du PVC à groupements OH décrit dans cet exemple avec du butanediol-1,4 à raison de 0,1 équivalent OH pour le PVC à groupements OH et de 0,9 équivalent OH pour le butanediol-1,4.

La polymérisation est de préférence effectuée sans catalyseur afin d'augmenter la durée de la conservation de la préparation avant son utilisation pour le traitement du profil surmoulé.

La composition réactive est mise en solution à 15 % dans la méthyléthylcétone.

Les autres conditions sont celles de l'exemple 1.

Les valeurs de pelage sont :
- Hₒ =: 65 N/cm
- H₇ =: 45 N/cm.

La rupture est cohésive.

### Exemple comparatif 5

On opère comme dans l'exemple 1, sauf qu'on utilise en tant que composant polyol un copolymère à motif formal à la place du motif chlorure de vinyle.

La masse moléculaire de ce terpolymère est comprise entre 25 000 et 150 000.

Les résultats au test de pelage sont :
- Hₒ =: 20 à 45 N/cm avec une rupture adhésive
- H₇ =: non mesuré.

Le terpolymère essayé ne convient donc pas.

### Exemple comparatif 6

On opère comme dans l'exemple 5, sauf qu'on utilise en tant que composant polyol un mélange de terpolymère à motif formal à la place du motif chlorure de vinyle et de butanediol-1,4 en prenant 0,25 équivalent OH de terpolymère et 0,75 équivalent OH de butanediol-1,4.

On observe une prise en masse de la composition réactive qui devient inutilisable pour l'application recherchée.

### EXEMPLE 6

La composition réactive de l'exemple 5 est utilisée pour traiter un vitrage encapsulé dans lequel le profil surmoulé est à base d'un PVC à groupements nitriles, choisis parmi ceux connus pour ce type d'application.

Les autres conditions sont celles de l'exemple 1.

Les valeurs de pelage sont :
- Hₒ =: 100 N/cm
- H₇ =: 60 N/cm.

La rupture est cohésive.

### EXEMPLE 7

On opère comme dans l'exemple 6, sauf qu'on modifie les proportions entre les deux polyols formant le composant polyol de la composition réactive, à savoir qu'on utilise 0,3 équivalent OH de PVC à groupements OH et 0,7 équivalent OH de butanediol -1,4.

Les valeurs de pelage sont les suivantes :
- Hₒ =: 90 N/cm
- H₇ =: 60 N/cm.

La rupture est cohésive.

### EXEMPLE 8

On opère comme dans l'exemple 6, sauf qu'on modifie les proportions entre les deux polyols formant le composant polyol de la composition réactive, à savoir qu'on utilise 0,9 équivalent OH de PVC à groupements OH et 0,1 équivalent OH de butanediol -1,4.

Les valeurs de pelage sont :
- Hₒ =: 85 N/cm
- H₇ =: 55 N/cm.

La rupture est cohésive.

### EXEMPLE 9

On fabrique un vitrage encapsulé par le procédé de moulage par injection thermoplastique d'un polyuréthane (TPU) connu pour ce type d'application.

On opère ensuite avec la composition de l'exemple 6 comme dans l'exemple 1.

Les valeurs de pelage sont :
- Hₒ =: 70
- H₇ =: 58.

La rupture est cohésive.

### EXEMPLE 10

On fabrique un vitrage encapsulé pour véhicule automobile par le procédé de moulage par injection réactive (procédé connu sous l'appellation RIM), c'est-à-dire un procédé dans lequel la matière de surmoulage injectée est un mélange réactionnel qui réagit et durcit dans le moule.

Le produit utilisé est ici un mélange de composants aptes à former un profil en polyuréthane. A cette fin, le vitrage est placé dans un moule dont la partie correspondant au profil à former est préalablement revêtue d'un agent démoulant, à savoir une cire de polyéthylène. Après l'opération d'encapsulation, le vitrage encapsulé est démoulé et la face du profil surmoulé destinée à être collée par l'intermédiaire du cordon de colle dans la baie de carrosserie est traitée, c'est-à-dire nettoyée à l'aide d'acétone.

Après séchage de quelques minutes à la température ambiante, on applique à l'aide d'un feutre sur la face nettoyée et séchée, la composition réactive déjà utilisée dans l'exemple 5. On forme ainsi une couche superficielle de 20 »m d'épaisseur environ, qu'on polymérise par un chauffage dans une enceinte à 120°C durant 5 minutes environ.

On procède ensuite comme dans l'exemple 1.

Les mesures d'adhésion par pelage sont les suivantes :
- Hₒ =: 75 N/cm
- H₇ =: 60 N/cm.

La composition réactive selon l'invention peut donc être utilisée avec avantage pour fabriquer des vitrages munis d'un profil d'encapsulation prêts à la pose, aussi bien lorsque le profil d'encapsulation est à base de PVC nitrile ou non qu'à base d'autre matériaux d'encapsulation connus, tels que les polyuréthanes thermoplastiques, ou ceux obtenus par injection réactive (RIM).

## Revendications

1. Vitrage monolithique ou feuilleté muni d'un profil périphérique surmoulé prêt à être monté par collage dans une baie, la face du profil périphérique destinée à être collée étant revêtue d'une couche polymérisée obtenue à partir d'une composition comprenant un composant isocyanate et un composant polyol pris en excès par rapport au composant isocyanate afin de former après polymérisation une couche de polyuréthane présentant des groupes hydroxyles libres susceptibles de réagir ultérieurement avec le cordon adhésif utilisé pour le montage du vitrage, caractérisé en ce que le composant polyol comprend au moins un copolymère de chlorure de polyvinyle à groupements hydroxyles libres.

2. Vitrage selon la revendication 1, caractérisé en ce que le rapport des groupes NCO aux groupes OH de la composition est compris entre 0,30 et 0,99.

3. Vitrage selon une des revendications 1 ou 2, caractérisé en ce que le copolymère PVC à groupements hydroxyles présente la formule suivante : 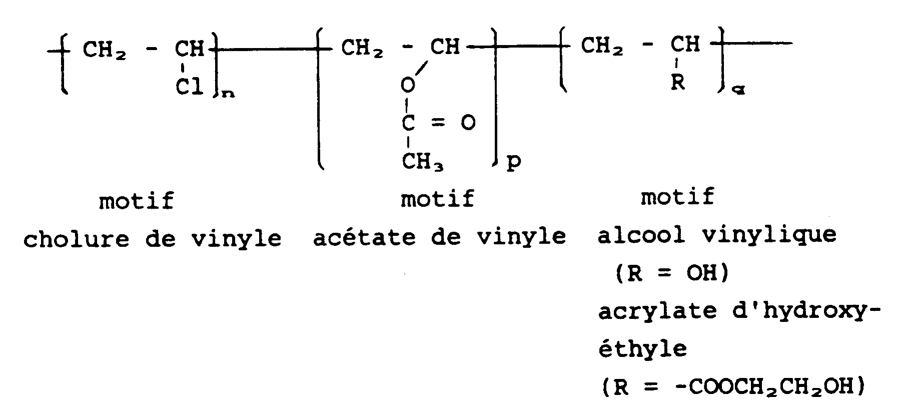 et une masse moléculaire comprise entre 1 000 et 100 000 environ, et de préférence de 2 000 à 50 000, le motif chlorure de vinyle correspondant à environ 50 à 95 % en poids, le motif acétate de vinyle correspondant à environ 2 à 40 % en poids et le motif alcool vinylique ou acrylate d'hydroxyéthyle correspondant à environ 2 à 40 % en poids.

4. Vitrage selon une des revendications 1 à 3, caractérisé en ce que le composant polyol comprend, en outre, au moins un autre polyol .

5. Vitrage selon la revendication 4, caractérisé en ce que l'autre polyol est un diol de masse moléculaire inférieure à 400.

6. Vitrage selon la revendication 5, caractérisé en ce que le diol est choisi parmi le butanediol-1,4, l'éthylèneglycol.

7. Vitrage selon une des revendications 1 à 6, caractérisé en ce que le composant isocyanate est à base de méthylènediphényldiisocyanate de fonctionnalité comprise entre 2 et 3.

8. Vitrage selon une des revendications 1 à 7, caractérisé en ce que le profil surmoulé est en chlorure de polyvinyle.

9. Procédé pour la fabrication d'un vitrage selon une des revendications 1 à 8, caractérisé en ce qu'après fabrication du profil surmoulé sur le vitrage, au moins la face du profil destinée à être collée est traitée par une composition réactive comprenant un composant isocyanate et un composant polyol comportant un excès de groupes OH, le composant polyol comprenant un copolymère PVC à groupes OH libres, et en ce que la couche de revêtement formée est polymérisée .

10. Procédé selon la revendication 9, caractérisé en ce qu'avant le traitement à l'aide de la composition réactive, on traite au préalable au moins une fois la face du profil surmoulé avec un solvant.

11. Procédé selon la revendication 10, caractérisé en ce que le solvant est choisi parmi l'acétone, l'heptane ou l'isododécane.

12. Procédé selon une des revendications 9 à 11, caractérisé en ce que la composition réactive à utiliser est une solution présentant une concentration comprise entre 10 et 50 % en poids en composants réactifs dans un solvant organique, de préférence choisi parmi la méthyléthylcétone, la méthylisobutylcétone.

## Claims

1. Monolithic or laminated pane equipped with a moulded-on peripheral profile ready to be mounted by gluing in an opening, the face of the peripheral profile intended to be glued being coated with a polymerized film produced from a composition containing an isocyanate component and a polyol component, taken in excess in relation to the isocyanate component, in order to form, after polymerization, a film of polyurethane having free hydroxyl groups capable of reacting later with the adhesive cord used for the mounting of the pane, characterized in that the polyol component comprises at least one copolymer of polyvinyl chloride having free hydroxyl groups.

2. Pane according to Claim 1, characterized in that the ratio of the NCO groups to the OH groups of the composition is between 0.30 and 0.99.

3. Pane according to one of Claims 1 or 2, characterized in that the PVC copolymer having hydroxyl groups has the following formula: 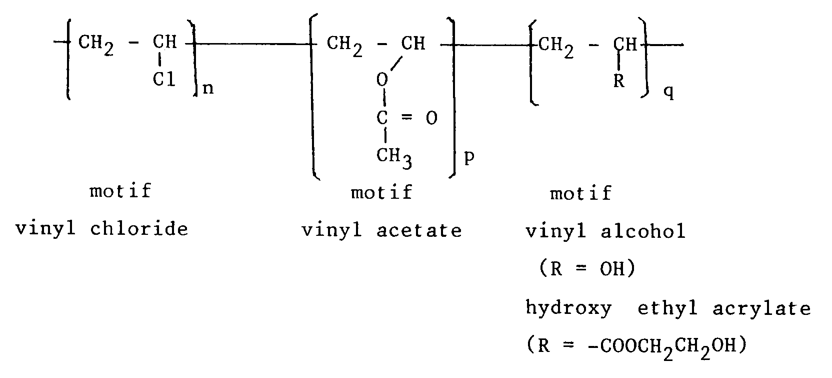 and of a molecular mass comprised between 1,000 and 100,000 approximately, and preferably from 2,000 to 50,000, the vinyl chloride motif corresponding to approximately 50 to 95% by weight, the vinyl acetate motif corresponding to approximately 2 to 40% by weight and the vinyl alcohol or hydroxy ethyl acrylate motif corresponding to approximately 2 to 40% by weight.

4. Pane according to one of Claims 1 to 3, characterized in that the polyol component contains, in addition, at least one other polyol.

5. Pane according to Claim 4, characterized in that the other polyol is a diol of molecular mass less than 400.

6. Pane according to Claim 5, characterized in that the diol is chosen from butane diol-1,4 and ethylene glycol.

7. Pane according to one of Claims 1 to 6, characterized in that the isocyanate component is based upon methylene diphenyl diisocyanate having a functionality of from 2 to 3.

8. Pane according to one of Claims 1 to 7, characterized in that the moulded-on profile is of polyvinyl chloride.

9. Method of making a pane according to one of Claims 1 to 8, characterized in that, after the production of the profile moulded onto the pane, at least the face of the profile intended to be glued is treated with a reactive composition containing an isocyanate component and a polyol component comprising an excess of OH groups, the polyol component containing a PVC copolymer having free OH groups, and in that the coating film formed is polymerized.

10. Method according to Claim 9, characterized in that, before the treatment with the reactive composition, the face of the moulded-on profile is treated in advance at least once with a solvent.

11. Method according to Claim 10, characterized in that the solvent is chosen from acetone, heptane and isododecane.

12. Method according to one of Claims 9 to 11, characterized in that the reactive composition to be used is a solution having a concentration of between 10 and 50% by weight of reactive components in an organic solvent, preferably chosen from among methylethylketone and methylisobutylketone.

## Patentansprüche

1. Einteilige oder Verbundverglasung, versehen mit einem aufgeformten Umfangsprofil und fertig für den Einbau durch Kleben in eine Öffnung, wobei die für das Einkleben bestimmte Seite des Umfangsprofils mit einer polymerisierten Schicht überzogen ist, welche ausgehend von einer Zusammensetzung hergestellt ist, die eine Isocyanatkomponente und eine in bezug auf die Isocyanatkomponente im Überschuß vorhandene Polyolkomponente umfaßt, um nach der Polymerisation eine Polyurethanschicht zu bilden, welche freie Hydroxylgruppen aufweist, die anschließend mit dem für den Einbau der Verglasung verwendeten Klebestreifen reagieren können, **dadurch gekennzeichnet, daß** die Polyolkomponente wenigstens ein Polyvinylchloridcopolymer mit freien Hydroxylgruppen enthält.

2. Verglasung nach Anspruch 1, **dadurch gekennzeichnet, daß** das Verhältnis der NCO- zu den OH-Gruppen der Zusammensetzung 0,30 bis 0,99 beträgt.

3. Verglasung nach Anspruch 1 oder 2, **dadurch gekennzeichnet, daß** das PVC-Copolymer mit Hydroxylgruppen folgende Formel 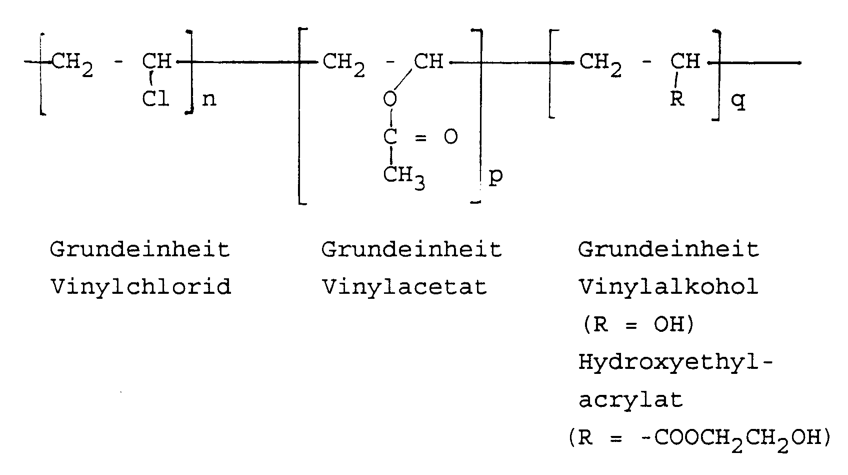 und eine Molmasse von etwa 1000 bis 100 000 und vorzugsweise von 2000 bis 50 000 besitzt, wobei die Vinylchlorid-Grundeinheiten etwa 50 bis 95 Gew.%, die Vinylacetat-Grundeinheiten etwa 2 bis 40 Gew.% und die Vinylalkohol- oder Hydroxyethylacrylat-Grundeinheiten etwa 2 bis 40 Gew.% ausmachen.

4. Verglasung nach einem der Ansprüche 1 bis 3, **dadurch gekennzeichnet, daß** die Polyolkomponente außerdem wenigstens ein anderes Polyol enthält.

5. Verglasung nach Anspruch 4, **dadurch gekennzeichnet, daß** das andere Polyol ein Diol mit einer Molmasse von unter 400 ist.

6. Verglasung nach Anspruch 5, **dadurch gekennzeichnet, daß** das Diol aus 1,4-Butandiol und Ethylenglykol ausgewählt ist.

7. Verglasung nach einem der Ansprüche 1 bis 6, **dadurch gekennzeichnet, daß** die Isocyanatkomponente Methylendiphenyldiisocyanat mit einer Funktionalität von 2 bis 3 zur Grundlage hat.

8. Verglasung nach einem der Ansprüche 1 bis 7, **dadurch gekennzeichnet, daß** das aufgeformte Profil aus Polyvinylchlorid besteht.

9. Verfahren zur Herstellung einer Verglasung nach einem der Ansprüche 1 bis 8, **dadurch gekennzeichnet, daß** nach der Herstellung des auf die Verglasung aufgeformten Profils wenigstens die für das Einkleben bestimmte Seite des Profils mit einer reaktiven Zusammensetzung behandelt wird, die eine Isocyanatkomponente und eine im Überschuß OH-Gruppen aufweisende Polyolkomponente umfaßt, wobei die Polyolkomponente ein PVC-Copolymer mit freien OH-Gruppen enthält, **und daß** die gebildete Überzugsschicht polymerisiert wird.

10. Verfahren nach Anspruch 9, **dadurch gekennzeichnet, daß** vor der Behandlung mit der reaktiven Zusammensetzung die Seite des aufgeformten Profils zunächst wenigstens einmal mit einem Lösungsmittel behandelt wird.

11. Verfahren nach Anspruch 10, **dadurch gekennzeichnet, daß** das Lösungsmittel aus Aceton, Heptan oder Isododecan ausgewählt ist.

12. Verfahren nach einem der Ansprüche 9 bis 11, **dadurch gekennzeichnet, daß** die zu verwendende reaktive Zusammensetzung eine Lösung ist, die eine Konzentration von 10 bis 50 Gew.% reaktive Komponenten in einem organischen Lösungsmittel aufweist, das vorzugsweise aus Methylethylketon und Methylisobutylketon ausgewählt ist.
